# FASCICULE DE BREVET EUROPEEN

(11) **EP 2 008 933 B1**
(45) Date de publication et mention de la délivrance du brevet: **06.10.2010**
(21) Numéro de dépôt: 08158907.9
(22) Date de dépôt: 24.06.2008
(51) Int. Cl.: B64D 27/26

(54) **Suspension d'un turbomoteur à la structure d'un aéronef**
Aufhängung eines Triebwerks an der Struktur eines Flugzeugs
Suspension of a turboshaft engine from an aircraft structure

(30) Priorité: 25.06.2007 FR 0704545
(43) Date de publication de la demande: 31.12.2008
(73) Titulaire: SNECMA, 75015 Paris (FR)
(72) Inventeur: Dron, Sébastien, 94230 Cachan (FR); Fontenoy, Gilles, Lucien, 77000, Livry sur Seine (FR); Tesniere, Marc, Patrick, 91750 Champcueil (FR)
(74) Mandataire: David, Daniel

(56) Documents cités:
- EP-A- 0 741 074
- EP-A- 0 872 418
- FR-A- 2 883 839

## Description

La présente invention concerne la suspension d'un turbomoteur à la structure d'un avion et vise plus particulièrement un moyen atténuateur de vibrations entre le moteur et la structure portante.

Un turbomoteur suspendu par exemple à une aile d'avion par l'intermédiaire d'un pylône comprend un point d'attache à l'avant reprenant les efforts transitant par le carter intermédiaire notamment et une attache arrière au niveau du carter d'échappement. Dans une suspension isostatique, les efforts sont transmis par des bielles convenablement distribuées entre les deux organes de fixation et qui travaillent généralement en traction et en compression. Les bielles sont fixées d'une part à une poutre solidaire de la structure de l'avion et d'autre part à des ferrures du carter du moteur ou directement au carter. Les fixations des bielles à leurs extrémités sont à rotules de façon à ne permettre la transmission d'efforts que le long de leur axe. Les efforts repris par ces organes de fixation sont le couple moteur et les efforts qui s'exercent dans le plan transversal du moteur comme le poids, les efforts latéraux et la poussée du moteur.

Afin de réduire les vibrations induites sur la structure et le bruit en cabine par le fonctionnement du moteur, il est connu d'introduire des moyens isolateurs de vibrations dans les systèmes de fixation. Par exemple, le brevet EP 250659 décrit une suspension d'un turbomoteur à la structure d'un avion incorporant un axe transversal entre une poutre à laquelle le moteur est suspendu par l'intermédiaire de bielles et le pylône sous l'aile de l'avion. L'axe transversal est supporté par une première paire d'isolateurs à ses extrémités travaillant en compression verticale et une seconde paire travaillant en compression transversale. Les deux paires sont indépendantes l'une de l'autre et peuvent avoir des coefficients d'élasticité différents. Cette solution présente un certain encombrement en hauteur.

D'autres agencements sont connus et sont relativement complexes. Ils sont appliqués généralement aux systèmes de type hyperstatique. Ce type d'accrochage a pour inconvénient principal la non connaissance des efforts transitant dans les pièces à chaque instant. Le dimensionnement des moyens isolateurs dans ce cas est donc plus difficile et incertain.

Le document EP 0 872 418 A2 décrit toutes les caractéristiques du préambule de la revendication 1.

La présente invention a pour objet la réalisation d'une suspension de turbomoteur dans une structure d'aéronef à la fois de type isostatique et incorporant un élément souple isolateur de vibrations, l'ensemble devant rester aussi compact que possible.

On parvient à réaliser cet objectif avec une suspension à la structure d'un aéronef comportant une poutre avec des moyens de fixation à ladite structure et au moins une bielle articulée par une extrémité sur un tourillon solidaire de la poutre et par l'autre sur une ferrure solidaire du turbomoteur, caractérisé par le fait que ledit tourillon est monté sur la poutre par l'intermédiaire d'une liaison souple formée de deux cylindres lamifiés, combinant des couches en élastomère et en métal collées entre elles, supportant le tourillon à chaque extrémité.

On limite ainsi la charge sur la liaison à celle exercée par une bielle. Et comme il existe en général plusieurs bielles, on assure de cette façon une répartition des efforts. Par ailleurs cette disposition permet de connaître parfaitement le chemin des efforts et les dimensions des éléments de la liaison souples peuvent être optimisées.

En particulier, les cylindres lamifiés comportent une première armature rigide annulaire solidaire du tourillon, une deuxième armature coaxiale au tourillon et une couche en matière élastomère entre les deux armatures, ladite couche en élastomère étant précontrainte.

Selon un mode de réalisation préféré, la première et la deuxième armatures présentent chacune une surface tronconique de même axe que le tourillon ladite couche précontrainte étant disposée entre les deux surfaces tronconiques.

Plus particulièrement, on obtient un moyen de liaison souple comportant un nombre de pièces réduit et tout en étant très compact avec la première armature rigide d'au moins l'un des deux cylindres lamifiés montés de manière à pouvoir coulisser sur le tourillon, la compression étant obtenue par rapprochement de la première armature vers la deuxième armature.

Avantageusement, les surfaces tronconiques des deux cylindres lamifiés sont symétriques par rapport au plan perpendiculaire au tourillon passant par la bielle, et les deux premières armatures sont montées coulissantes sur le tourillon. Le matériau élastomère est précontraint par rapprochement des deux premières armatures l'une vers l'autre.

On décrit maintenant un mode de réalisation de l'invention, non limitatif en référence aux dessins sur lesquels
La figure 1 montre un mode de réalisation d'une suspension conforme à l'invention, vue en perspective,
La figure 2 est une vue en coupe selon II II de la suspension de la figure 1,
La figure 3 montre une suspension de l'invention en cours de montage.

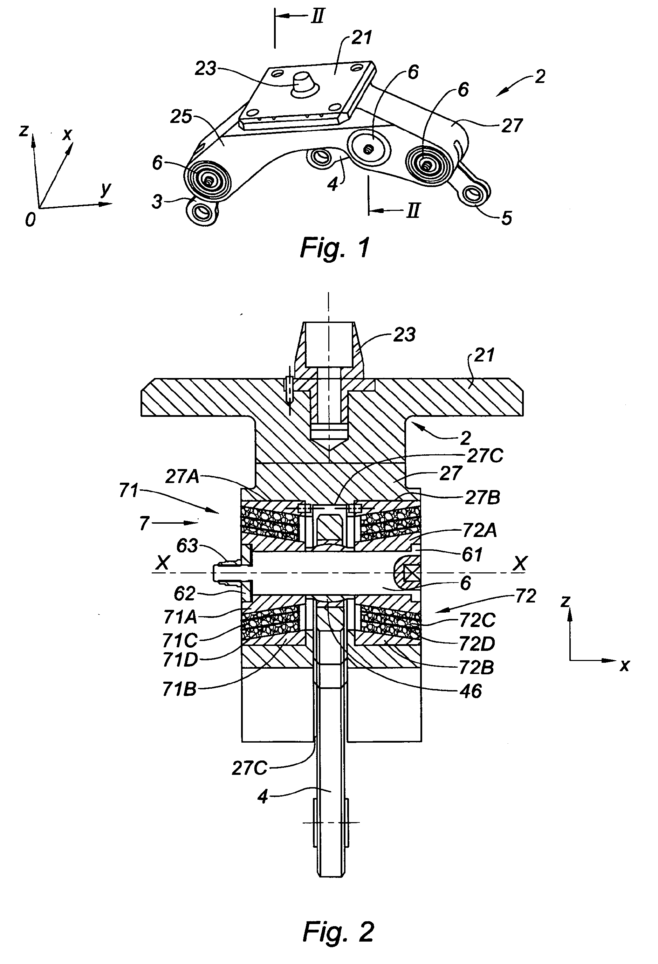

La suspension de la figure 1 est composée d'une poutre 2 avec une plateforme 21 supérieure dans laquelle ont été percés des orifices pour le passage d'organes de fixation tels que des boulons, non représentés, de la poutre à la structure d'un aéronef. Il peut s'agir pour celle-ci d'un pylône de montage sous l'aile, mais l'invention convient plus généralement à la fixation à toute partie de l'aéronef. Un pion central 23 assure la reprise des efforts de cisaillement.

A cette plateforme sont reliés ici deux bras 25 et 27 disposés en V sur lesquels sont montées les bielles 3, 4 et 5. Celles ci sont articulées sur des tourillons, 6 parallèles entre eux et montés par des liaisons souples dans les bras 25 et 27. La poutre peut être de structure ou géométrie différente ; celle représentée n'est pas limitative. L'extrémité libre des bielles est percée pour le passage d'un organe de fixation à la ferrure du carter de moteur non représenté. Les bielles sont ici disposées dans le plan transversal par rapport à l'axe du moteur. Elles peuvent être aussi à proximité de ce plan. Les deux bielles extérieures 3 et 5 sont accrochées à une bride transversale du carter de manière que les points d'attaches forment un trapèze. En raison des fixations à rotule ces deux bielles transmettent les efforts selon les axes 0Y et 0Z perpendiculaires à l'axe du moteur. La bielle centrale 4 a pour fonction dans cette disposition de transmettre en combinaison avec les autres bielles les efforts liés au couple moteur. L'axe 0X sur le repère associé à la figure 1 est l'axe du moteur : l'axe 0Z est l'axe vertical et l'axe 0Y est transversal. En se reportant à la figure 2, on voit, plus en détail, le montage d'une bielle sur la poutre. Il s'agit de la bielle centrale 4 mais ce montage vaut pour les deux autres bielles 3 et 5. Dans le bras 27 selon ce mode de réalisation, deux logements cylindriques 27A et 27B ont été usinés. Leur axe XX est perpendiculaire au plan formé par les bras 25 et 27. Ces deux logements sont séparés par une fente 27C ouverte du côté opposé à la plate forme 21. La fente sert de logement à la bielle 4 et sa largeur est suffisante pour en permettre le débattement à l'intérieur. La bielle est articulée sur un tourillon 6 d'axe XX, parallèle à l'axe moteur par l'intermédiaire d'un palier à rotule 46. Ce palier permet à la bielle de se mouvoir autour de l'axe XX principalement et autour de deux autres axes perpendiculaires à l'axe XX ; c'est à dire l'axe transversal YY et l'axe vertical ZZ. Le mouvement est autorisé dans les limites du jeu ménagé entre la bielle 4 et les parois de la fente 27C.

Conformément à l'invention, une liaison souple 7 dont la fonction est d'amortir les vibrations entre la source constituée par le moteur et la poutre, relie le tourillon 6 au bras 27. Cette liaison souple est constituée de deux cylindres lamifiés 71 et 72 comprenant des couches en matériau élastomère alternant avec des couches rigides métalliques. Les éléments cylindriques sont disposés respectivement dans les logements 27A et 27B. Chacun des cylindres 71 et 72 comprend une première armature rigide, métallique notamment, 71A et 72A ; une deuxième armature rigide, 71B et 72B respectivement, et entre les deux des couches en matériau élastomère 71C, 72C, alternées le cas échéant avec une ou plusieurs couches métalliques 71D, 72D. Le cylindre peut ne comprendre qu'une seule couche élastomère entre les deux armatures, sans couche métallique. Ici on a représenté 3 couches d'élastomère 71C, 72C et deux couches métalliques 71D, 72D. Toutes les couches adhèrent les unes aux autres. On se réfère par la suite à la couche élastomère 71C, 72C. La première armature annulaire est montée sur le tourillon 6 et sa surface extérieure est tronconique d'axe XX. La deuxième armature annulaire est calée par sa surface externe dans le logement 27A et a également une surface tronconique, mais interne. Les deux surfaces coniques sont de même angle au sommet et d'axe XX. Elles ménagent entre elles un espace comblé par la couche d'élastomère. Conformément à une caractéristique de l'invention, cette couche est précontrainte. Cette caractéristique est obtenue par rapprochement des deux surfaces tronconiques l'une vers l'autre, le long de l'axe XX. Cette compression permet à l'élastomère de ne pas être soumis à une dépression pendant un quelconque déplacement relatif du tourillon par rapport à la poutre le long d'un quelconque des axes XX YY et ZZ.

La forme tronconique a l'avantage de permettre de réaliser la mise sous contrainte aisément. Une forme cylindrique précontrainte, quoique plus difficile à réaliser, serait éventuellement aussi envisageable.

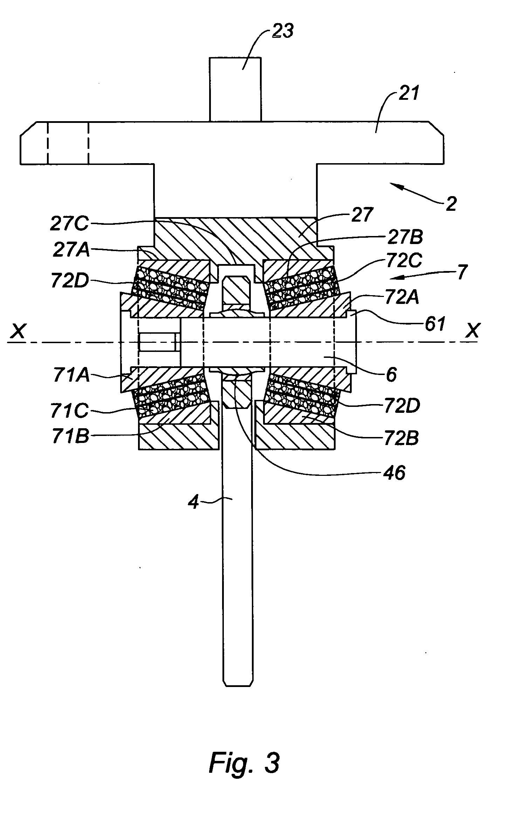

Cette disposition est particulièrement simple à mettre en oeuvre aussi bien sur le plan de la structure que du montage de la suspension. Comme on le voit sur la figure 3, les deux cylindres 71 et 72 se présentent, avant montage, avec leur couche élastomère 71C 72C non comprimée, les deux armatures étant écartées l'une de l'autre axialement en raison de la mobilité de la première armature qui peut coulisser sur le tourillon. Après avoir mis en place les cylindres lamifiés 71, 72 dans leur logement respectif 27A et 27B, on positionne la bielle dans la fente 27C, puis on introduit le tourillon 6_ d'un côté dans l'armature jusqu'à ce qu'il vienne en butée par un épaulement 61 du tourillon ; on glisse une rondelle 62 à l'autre extrémité du tourillon qui est filetée. On dispose un écrou 63 sur la partie filetée que l'on serre. La figure 3 montre la pièce assemblée avant serrage. Les deux premières armatures 71A et 72A sont décalées par rapport aux deuxièmes armatures 71B et 72B qui sont calées dans leur logement respectif 27A et 27B. En serrant l'écrou on rapproche les deux rondelles l'une de l'autre qui entraînent les deux premières armatures. Il s'ensuit que la couche élastomère, 71C et 72C entre chaque première et deuxième armature est soumise à une compression axiale.

La solution de l'invention permet de réaliser une liaison souple entre le tourillon et la poutre à travers laquelle cheminent les efforts exercés par la bielle sur le tourillon.

## Revendications

1. Suspension d'un turbomoteur à la structure d'un aéronef comportant une poutre (2) avec des moyens de fixation à ladite structure et au moins une bielle (4) articulée par une extrémité sur un tourillon (6) solidaire de la poutre et apte à être articulée par l'autre sur une ferrure solidaire du turbomoteur, **caractérisé par le fait que** ledit tourillon (6) est monté sur la poutre par l'intermédiaire d'une liaison souple (7) formée de deux cylindres (71, 72) lamifiés, élastomère et métal, supportant le tourillon (6) à ses extrémités.

2. Suspension selon la revendication 1 dont les cylindres lamifiés comportent une première armature (71A, 72A) rigide annulaire solidaire du tourillon, une deuxième armature (71B, 72B) de même axe, et une couche (71C, 72C) en matériau élastomère entre les deux armatures, ladite couche en élastomère étant précontrainte par les deux armatures (71A, 71B; 72A, 72B).

3. Suspension selon la revendication 2 dont la première (71A, 72A) et la deuxième (71B, 72B) armatures présentent chacune une surface tronconique de même axe que le tourillon ladite couche élastomère (71C, 72C) précontrainte étant disposée entre les deux surfaces tronconiques.

4. Suspension selon la revendication 3 dont la première armature (71 A, 72A) rigide d'au moins l'un des cylindres lamifiés est montée coulissante sur le tourillon (6), la précontrainte étant obtenue par rapprochement de la première armature (71A, 72A) vers la deuxième armature (71B, 72B).

5. Suspension selon la revendication 3 ou 4 dont les deux cylindres (71, 72) lamifiés sont symétriques par rapport au plan perpendiculaire au tourillon passant par la bielle (4).

6. Suspension selon la revendication 5 dont les deux premières armatures (71A, 72A) sont montées coulissantes sur le tourillon (6), le matériau élastomère étant précontraint par le rapprochement des deux premières armatures l'une vers l'autre.

7. Turbomoteur comportant une suspension selon les revendications 1 à 6.

## Claims

1. A suspension for suspending a turbine engine from the structure of an aircraft comprising a beam (2) with means of attachment to said structure and at least one link rod (4) articulated via one end to a journal (6) secured to the beam and via the other to a fitting secured to the turbine engine, wherein said journal (6) is mounted on the beam via a flexible coupling (7) formed of two laminated 71, 72), elastomer and metal, cylinders supporting the journal (6) at its ends.

2. The suspension as claimed in claim 1, of which the laminated cylinders comprise an annular rigid first armature (71A, 72A) secured to the journal, a second armature (71B, 72B) with the same axis, and a layer (71C, 72C) of elastomeric material between the two armatures, said elastomer layer being preloaded by the two armatures (71A, 71B ; 72A, 72B).

3. The suspension as claimed in claim 2, of which the first (71A, 72A) and second (71B, 72B) armatures each have a frustoconical surface with the same axis as the journal, said preloaded elastomer layer (71C, 72C) being positioned between the two frustoconical surfaces.

4. The suspension as claimed in claim 3 of which the rigid first armature (71A, 72A) of at least one of the laminated cylinders is slidably mounted on the journal (6), the preload being obtained by moving the first armature (71A, 72A) toward the second armature (71B, 72B).

5. The suspension as claimed in claim 3 or 4 of which the two laminated cylinders (71, 72) are symmetric with respect to the plane perpendicular to the journal passing through the link rod (4).

6. The suspension as claimed in claim 5 of which the two first armatures (71A, 72A) are slidably mounted on the journal (6), the elastomeric material being preloaded by moving the two first armatures toward one another.

7. A turbine engine comprising a suspension as claimed in claims 1 to 6.

## Patentansprüche

1. Aufhängung eines Triebwerks an der Struktur eines Flugzeugs, umfassend einen Träger (2) mit Mitteln zur Befestigung an der Struktur und mindestens eine Pleuelstange (4), die an einem Ende auf einem Zapfen (6), der mit dem Träger fest verbunden ist, und am anderen Ende auf einem Beschlag, der mit dem Triebwerk fest verbunden ist, gelenkig angebracht ist, **dadurch gekennzeichnet, dass** der Zapfen (6) mithilfe einer flexiblen Verbindung (7) auf dem Träger montiert ist, gebildet aus zwei beschichteten Zylindern (71, 72), Elastomer und Metall, die den Zapfen (6) an seinen Enden tragen.

2. Aufhängung nach Anspruch 1, wobei die beschichteten Zylinder eine erste starre, ringförmige, Armierung (71a, 72a) umfassen, die mit dem Zapfen fest verbunden ist, eine zweite Armierung (71b, 72b) mit der gleichen Achse, und eine Schicht (71c, 72c) aus Elastomermaterial zwischen den zwei Armierungen, wobei die Schicht Aus Elastomer von den zwei Armierungen (71a, 71b; 72a, 72b) vorgespannt ist.

3. Aufhängung nach Anspruch 2, wobei die erste (71a, 72a) und die zweite (71b, 72b) Armierung jeweils eine kegelstumpfartige Fläche mit der gleichen Achse wie der Zapfen aufweisen, wobei die vorgespannte elastomerische Schicht (71c, 72c) zwischen den zwei kegelstumpfartigen Flächen angebracht ist.

4. Aufhängung nach Anspruch 3, wobei die erste starre Armierung (71a, 72a) mindestens eines der beschichteten Zylinder herausziehbar auf dem Zapfen (6) montiert ist, wobei die Vorspannung durch die Annäherung der ersten Armierung (71a, 72a) an die zweite Armierung (71b, 72b) erhalten wird.

5. Aufhängung nach Anspruch 3 oder 4, wobei die zwei beschichteten Zylinder (71, 72) symmetrisch bezüglich der senkrechten Ebene zum Zapfen sind, verlaufend durch den Pleuel (4) .

6. Aufhängung nach Anspruch 5, wobei die zwei ersten Armierungen (71a, 72a) herausziehbar auf dem Zapfen (6) montiert sind, wobei das elastomerische Material durch die Annäherung der zwei ersten Armierungen aneinander erhalten wird.

7. Triebwerk, umfassend eine Aufhängung nach den Ansprüchen 1 bis 6.
